# EUROPÄISCHE PATENTSCHRIFT

(11) **EP 2 132 441 B1**
(45) Veröffentlichungstag und Bekanntmachung des Hinweises auf die Patenterteilung: **30.10.2013**
(21) Anmeldenummer: 08734326.5
(22) Anmeldetag: 27.02.2008
(51) Int. Cl.: F03D 11/00, F03D 11/02

(54) **WINDENERGIEANLAGE MIT LASTÜBERTRAGENDEN BAUTEILEN**
WIND TURBINE COMPRISING LOAD TRANSMITTING COMPONENTS
ÉOLIENNE COMPRENANT DES COMPOSANTS DE TRANSMISSION DE CHARGE

(30) Priorität: 15.03.2007 DE 102007012408
(43) Veröffentlichungstag der Anmeldung: 16.12.2009
(73) Patentinhaber: Aerodyn Engineering GmbH, 24768 Rendsburg (DE)
(72) Erfinder: SIEGFRIEDSEN, Sönke, 24768 Rendsburg (DE)
(74) Vertreter: Lobemeier, Martin Landolf
(86) Internationale Anmeldenummer: PCT/DE2008/000345
(87) Internationale Veröffentlichungsnummer: WO 2008/113318

(56) Entgegenhaltungen:
- DD-A1- 268 741
- JP-A- 2001 304 094
- US-A- 2 199 234
- US-A- 4 527 072
- US-A1- 2006 052 200

## Beschreibung

Die Patentanmeldung betrifft eine Windenergieanlage mit einem kompakt ausgebildeten Antriebsstrang.

Windenergieanlagen sind in den letzten Jahrzehnten stetig größer geworden, wobei der Trend zu immer kompakteren und leichteren Einheiten geht. Vielfach kommen dabei sogenannte Momentenlager zum Einsatz, die nicht nur die Schub- und Querkräfte aus dem Rotor aufnehmen, sondern auch die Biegemomente an nur einer Lagerstelle übertragen. Die Verwendung dieser Lager führt zu deutlich kompakteren Triebsträngen im Vergleich zu Konzepten mit einer doppelten Rotorlagerung. Allerdings sind in den meisten Fällen der bekannten Anlagen die Getriebe und auch die Generatoren hinter dem Lager als separate Komponenten auf einem Maschinenträger angeordnet. Der Maschinenträger hat dann die zusätzliche Funktion die Rotorlasten vom Rotorlager in den Turmkopf zu übertragen. Da diese Momentenlager relativ große Durchmesser aufweisen und eine flächige, steife Auflagefläche zum Verschrauben über den gesamten Umfang des Lagers benötigt wird, werden bevorzugt Maschinenträger in gegossener Ausführung eingesetzt. Von der Lageranschraubfläche müssen dann die Lasten über den Maschinenträger in den Turmkopf eingeleitet werden, ohne dass dabei die Struktur des Maschinenträgers mit dem Getriebe und dem Generator zu kollidieren. Dieses führt zu Gussstrukturen, die im rotorabgewandten Bereich große Öffnungen haben müssen um das Getriebe einbauen zu können. Diese offenen Strukturen haben vom Standpunkt der Festigkeits- und Verformungsbetrachtung erhebliche Nachteile, da die Komponenten dadurch große Zusatzbelastungen erfahren. Ferner haben diese Konstruktionen zu viele Bauteile, da die Funktion der Bauteile von der Lastübertragung getrennt ist. Ziel bei der Entwicklung von neuen Windenergieanlagen muss es daher sein die Anlagen kompakter, leichter und kostengünstiger zu gestalten.

Wie auch die JP 2001 304094 A zeigt die WO 2005/033505 A1 bereits eine schon sehr kompakte Ausführung des Triebstranges mit einem separaten Getriebe und Generator. Zur Befestigung des Generators ist eine weitere Tragstruktur notwendig, sowie eine Gondelverkleidung erforderlich, um die Komponenten vor Witterungseinflüssen zu schützen.

Die DE 103 51 524 A1 schlägt ebenfalls eine kompakte Lösung vor, bei der das Getriebe und die Nabe noch dichter zusammen positioniert werden konnten, die Formgebung der Gussstruktur des Maschinenträgers ist ungünstig, so dass hohe Spannungsspitzen und Verformungen zu erwarten sind. Auch hier ist eine Gondelverkleidung erforderlich.

Mit der WO 02/079644 A1 wird eine noch kompaktere Lösung vorgeschlagen, bei der ein Teil des Getriebes in die Rotorlagerung integriert wird. Aber auch hier gibt es ein zusätzliches Getriebe und den separaten Generator, der eine weitere Tragstruktur benötigt. Ferner ist die große Öffnung im Gussmaschinenträger zu erkennen, die strukturell erhebliche Nachteile hat.

Die DD 268741 A1 zeigt ebenfalls einen kompakten Gondelaufbau, wobei diese Ausführung nur für kleine Windenergieanlagen möglich ist, weil die Anlage als Leeläufer ausgelegt und ohne Windrichtungsnachführung und Vertikalbremseinrichtung ausgestattet ist. Ferner hat zwar die Integration von Getriebe und Generator in ein Gehäuse den Vorteil einer äußerst kompakten Bauweise aber auch den Nachteil, dass Reparaturen nur sehr aufwendig durchzuführen sind, weil die Zugriffsmöglichkeit auf die Bauteile stark eingeschränkt ist.

Aufgabe der Erfindung ist es einen Triebstrang zu schaffen, der eine sehr kompakte, leichte und damit kostengünstige Gesamtbauweise ermöglicht und die Hauptkomponenten wie Rotorlager, Getriebe, Generator und Windrichtungsnachführung in den Kraftfluss vom Rotor in den Turm mit einbindet. Dabei soll gewährleistet sein, dass die einzelnen Komponenten, insbesondere Getriebe und Generator, separat montiert und auch für Reparaturarbeiten einzeln gehandhabt werden können.

Erfindungsgemäß wird diese Aufgabe durch die Merkmale des Anspruchs 1 gelöst, die Unteransprüche geben bevorzugte Ausgestaltungen der Erfindung an.

Durch die Erfindung wird eine weitere Integration der Funktionselemente erreicht, Bauteile werden eingespart.

Die Komponenten Getriebe, Generator und Windrichtungsnachführung sind bei der Erfindung in separaten Gehäusen angeordnet, die mit einander verschraubt werden. Die jeweiligen Gehäuse sind als tragende Struktur zur Übertragung der maximalen statischen und dynamischen Rotorlasten ausgelegt. Das Rotorlager ist ebenfalls mit dem Getriebegehäuse verschraubt und überträgt die Rotorlasten in das Getriebegehäuse. Das Getriebegehäuse überträgt die Lasten in das Generatorgehäuse. Dieses Gehäuse überträgt die Lasten in das Generatorgehäuse. Das Generatorgehäuse wiederum überträgt die Lasten in den Kopfträger, der wiederum die Lasten über das Azimutlager in den Turm einleitet. Durch diesen Aufbau übernehmen die Gehäuse der Komponenten die doppelte Funktion als Lastübertragungselement und als Montageelement für die einzelnen Bauteile der Komponenten. Diese Auslegung ermöglicht es, dass die Maschine sehr leicht und damit kostengünstig wird und zusätzlich auf eine Gondelverkleidung verzichtet werden kann, da alle Komponenten so ausgeführt sind, dass sie der Bewitterung ausgesetzt werden können. Aus Montagegründen ist es sinnvoll das Getriebegehäuse und das Generatorgehäuse als zwei separate Gehäuse auszuführen, es kann aber auch in einem Stück ausgeführt werden.

Diese Anordnung ist ganz besonders vorteilhaft, wenn der Rotomabenanschluss, das Rotorlager, das Getriebe und der Generator vom Außendurchmesser ungefähr gleiche Abmessungen vorweisen. In diesem Fall ergibt sich ein besonders günstiger Kraftfluss ohne größere Lastumlenkungen. Dieses führt dazu, dass das Getriebe sinnvoller weise ein zweistufiges Planetengetriebe mit koaxialen An- und Abtriebsachsen ist und einer Übersetzung von ca. 15 bis 25 aufweist. Der Generator wird dahinter angeordnet und hat dann eine Nenndrehzahl von ca. 200 bis 400 min-1. Beide Komponenten sind in einem gemeinsamen oder zwei getrennte Gehäuse eingebaut, die so ausgelegt sind, dass sie die Lasten vom Rotor auf den Kopfträger übertragen können. Der Kopfträger leitet dann die Lasten in den Turm ein und hat ferner die Funktion die Windrichtungsnachführung, die Vertikalbremsen, die Getriebeschmierung und die Wärmetauscher zur Getriebe- und Generatorkühlung aufzunehmen.

Ein bevorzugtes Ausführungsbeispiel der Erfindung wird im folgenden anhand einer Zeichnung erläutert. Dabei zeigt:

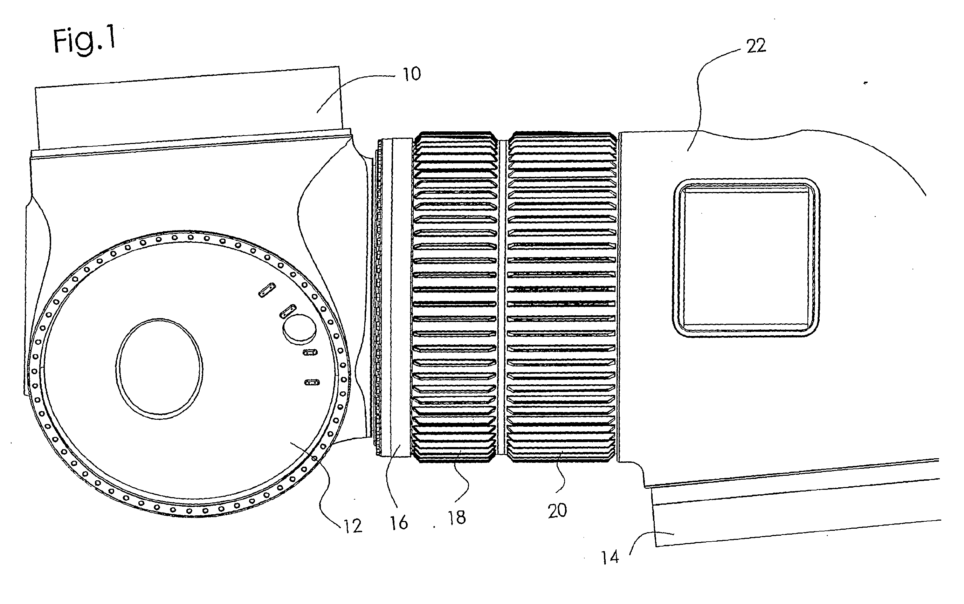

Fig. 1 eine Seitenansicht auf Nabe, Rotorlager, Generatorgehäuse und Kopfträger, wobei nur ein Rotorblatt geschnitten dargestellt ist, und
Fig. 2 einen Fig. 1 entsprechende, teilweise geschnittene Darstellung.

Der durch die Rotorblätter 10 und die Nabe 12 der Windenergieanlage gebildete Rotor wird durch das Rotorlager 16 gelagert und überträgt die Kräfte und Momente auf die nachfolgenden Bauteile. Das Getriebe ist im Getriebegehäuse 18 integriert. Der nachgeschaltete Generator ist im Generatorgehäuse 20 eingebaut. Beide Gehäuse 18, 20 haben in etwa den gleichen Durchmesser und sind miteinander verschraubt. Das Generatorgehäuse 20 ist wiederum mit einem Kopfträger 22 verschraubt, der die Lasten über ein Azimutlager 42 in einen Turm 14 einleitet. Alle erforderlichen Aggregate und Komponenten sind in diesen Elementen untergebracht. Eine zusätzliche Gondelverkleidung zum Witterungsschutz und zur Aufnahme von Nebenaggregaten ist nicht erforderlich. Zur teilweisen Abfuhr der Verlustwärme an die Außenluft sind beide Gehäuse außen mit Kühlrippen versehen.

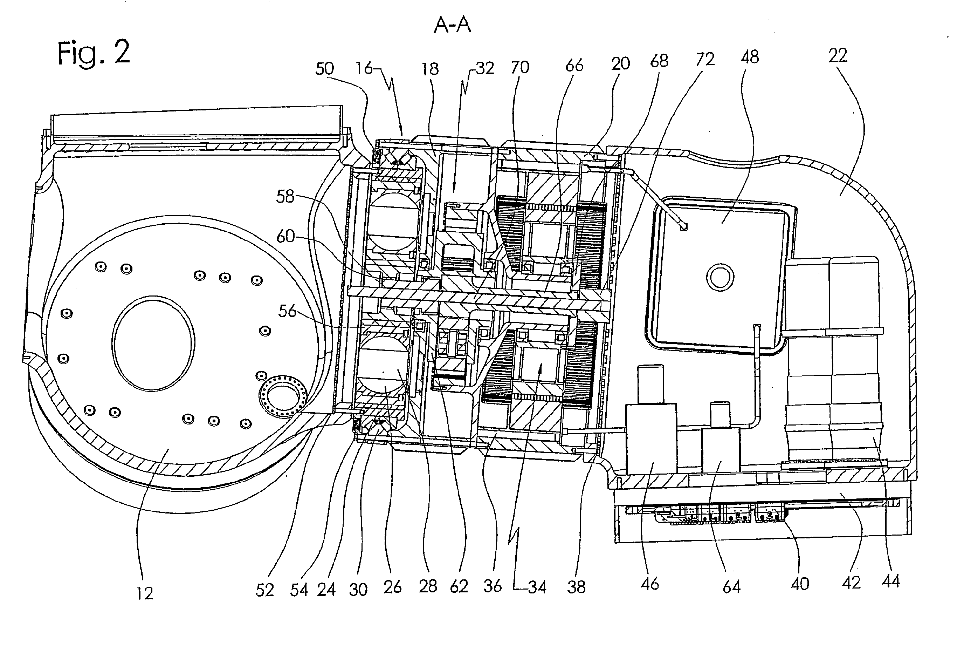

Die Nabe 12 ist (Fig. 2) über die Verschraubung 52 mit dem Hohlrad 24 der ersten Getriebestufe verbunden. Dieses Hohlrad 24 ist in den Innenring der Rotorlagers 16 eingepresst und fest verbunden. Der Außenring 30 des Rotorlagers 16 ist durch die Schrauben 54 mit dem Getriebegehäuse 18 und über dieses mit dem Generatorgehäuse 20 fest verbunden. Die Labyrinthdichtung 50 dichtet das Getriebe 36 nach außen ab. Die Planetenräder 56 der ersten Getriebestufe sind über sphärische Gleitlager 26 gelagert. Diese Gleitlager 26 werden über Lagerzapfen 28 an dem Getriebegehäuse 18 befestigt. Die Planetenräder 56 übertragen das Drehmoment an das Sonnenrad 58. Zentrisch im Sonnenrad ist eine Bogenverzahnung angebracht, die das Drehmoment auf die Zwischenwelle 60 überträgt. Diese Zwischenwelle 60 wiederum ist in den Planetenträger 62 der zweiten Planetenstufe eingesteckt. Die zweite Planetenstufe 32 ist ebenfalls in das Getriebegehäuse 18 integriert und treibt das Sonnenrad mit der Übertragungswelle 66 an. Diese Übertragungswelle 66 ist durch eine Bogenverzahnung mit dem Generatorantriebsflansch 68 drehmomentmäßig verbunden. Der Generator 34 ist als permanent erregter Synchrongenerator ausgeführt, der in das Generatorgehäuse 20 eingebaut und mit einem Wasserkühlmantel 36 versehen ist. Der Kühlkreislauf wird durch die Förderpumpe 64 betrieben und die Abwärme durch den Kühler 48 an die Außenluft abgeführt. Das Generatorgehäuse 20 ist mit den Verschraubungen 38 mit dem Kopfträger 22 verbunden. Der Kopfträger 22 beinhaltet die Verstellantriebe 44 für die Windrichtungsnachführung, die Vertikalbremsen 40, die Kühler 48 für das Getriebe und den Generator, den Getriebeölbehälter 46 mit Filtern und Umwälzpumpen sowie die Umwälzpumpe 64 für den Generatorkühlkreislauf. Durch die beiden Getriebestufen und den Generator ist ein zentrales Rohr 70 zentrisch durch-geführt, in dem die Energieversorgung für die Rotorblattverstellung verlegt ist. Über die Drehdurchführung bzw. den Schleifring 72 wird die erforderliche Energie vom still stehenden Teil des Kopfträgers 22 auf die drehende Nabe 12 übertragen.

## Patentansprüche

1. Windenergieanlage mit aus mindestens einem Rotorblatt (10) und einer Nabe (12) gebildeten Rotor, einem den Rotor lagernden Rotorlager (16), einem ein Getriebe (32) aufnehmenden Getriebegehäuse (18), einem einen Generator (34) aufnehmenden Generatorgehäuse (20), einem Kopfträger (32), einem Turm (14) und einem den Kopfträger drehbar auf dem Turm (14) lagernden Azimutlager (42), wobei
das Rotorlager (16), das Getriebegehäuse (18) und das Generatorgehäuse (20) zwischen der Nabe (12) und dem Kopfträger (22) angeordnet sind, **dadurch gekennzeichnet, dass** das Rotorlager (16), das Getriebegehäuse (18), das Generatorgehäuse (20) und der Kopfträger (22) als lastübertragende Bauteile zum Einleiten der Rotorlasten in den Turm (14) ausgelegt und miteinander über Schraubverbindungen (54, 38) zusammengefügt sind.

2. Windenergieanlage nach Anspruch 1, **dadurch gekennzeichnet, dass** das Getriebegehäuse (18) und das Generatorgehäuse (20) separate Gehäuse sind.

3. Windenergieanlage nach Anspruch 2, **dadurch gekennzeichnet, dass** das Getriebegehäuse (18) und das Generatorgehäuse (20) etwa gleiche Außendurchmesser aufweisen.

4. Windenergieanlage nach einem der vorangehenden Ansprüche, **dadurch gekennzeichnet, dass** das Rotorlager (16) ein direkt vor das Getriebegehäuse (18) geschraubtes Momentenlager ist.

5. Windenergieanlage nach einem der vorangehenden Ansprüche, **dadurch gekennzeichnet, dass** das Getriebe (32) ein zweistufiges Planetengetriebe ist.

6. Windenergieanlage nach einem der vorangehenden Ansprüche, **dadurch gekennzeichnet, dass** der Generator (34) ein permanent erregter Synchrongenerator ist.

7. Windenergieanlage nach einem der vorangehenden Ansprüche, **dadurch gekennzeichnet, dass** das Getriebegehäuse (18) und/oder das Generatorgehäuse (20) mit nach außen weisenden Kühlrippen versehen sind.

8. Windenergieanlage nach einem der vorangehenden Ansprüche, **dadurch gekennzeichnet, dass** als Labyrinthdichtungen ausgebildete Getriebeabdichtungen vorgesehen sind.

9. Windenergieanlage nach einem der vorangehenden Ansprüche, **dadurch gekennzeichnet, dass** der Generator (34) einen in das Generatorgehäuse (20) integrierten Wasserkühlmantel (36) aufweist.

10. Windenergieanlage nach einem der vorangehenden Ansprüche, **dadurch gekennzeichnet, dass** in dem Kopfträger (22) eine Windrichtungsnachführung bestehend aus Azimutlager (42), Verstellantrieben (44) und Vertikalbremsen (40) sowie Getriebeölbehälter (46) und die Kühler (48) für Getriebe (32) und Generator (34) angeordnet sind.

11. Windenergieanlage nach einem der vorangehenden Ansprüche, **gekennzeichnet durch** ein **durch** das Getriebe (32) und den Generator (34) zentrisch durchgeführtes, mit der Drehzahl des Rotors drehendes Rohr (72), das die Energieversorgungsleitungen für die Blattverstellung aufnimmt.

12. Windenergieanlage nach einem der vorangehenden Ansprüche, **dadurch gekennzeichnet, dass** das Generatorgehäuse (18), das Getriebegehäuse (20) und der Kopfträger (22) wetterfest ausgebildet sind.

## Claims

1. A wind turbine comprising a rotor formed from at least one rotor blade (10) and a hub (12), a rotor bearing (16) supporting the rotor, a transmission housing (18) accommodating a transmission (32), a generator housing (20) accommodating a generator (34), a head support (32), a tower (14), and an azimuth bearing (42) rotatably supporting the head support on the tower (14), the rotor bearing (16), the transmission housing (18), and the generator housing (20) being arranged between the hub (12) and the head support (22),
**characterized in that**
the rotor bearing (16), the transmission housing (18), the generator housing (20), and the head support (22) are arranged as load-transmitting components for introducing the rotor loads into the tower (14) and joined together by means of screw connections (54, 38).

2. The wind turbine according to Claim 1, **characterized in that** the transmission housing (18) and the generator housing (20) are separate housings.

3. The wind turbine according to Claim 2, **characterized in that** the transmission housing (18) and the generator housing (20) have approximately the same outside diameter.

4. The wind turbine according to one of the preceding claims, **characterized in that** the rotor bearing (16) is a moment bearing screwed directly in front of the transmission housing (18).

5. The wind turbine according to one of the preceding claims, **characterized in that** the transmission (32) is a two-stage planetary transmission.

6. The wind turbine according to one of the preceding claims, **characterized in that** the generator (34) is a permanent field synchronous generator.

7. The wind turbine according to one of the preceding claims, **characterized in that** the transmission housing (18) and/or the generator housing (20) are provided with outward facing cooling ribs.

8. The wind turbine according to one of the preceding claims, **characterized in that** transmission seals designed as labyrinth seals are provided.

9. The wind turbine according to one of the preceding claims, **characterized in that** the generator (34) exhibits a water cooling jacket (36) integrated into the generator housing (20).

10. The wind turbine according to one of the preceding claims, **characterized in that** there are arranged in the head support (22) a wind direction tracking unit consisting of an azimuth bearing (42), adjustability drives (44), and vertical brakes (40) and also transmission-oil reservoirs (46) and the coolers (48) for transmission (32) and generator (34).

11. The wind turbine according to one of the preceding claims, **characterized by** a tube (72) that rotates at the speed of the rotor, passes centrally through the transmission (32) and the generator (34) and accommodates the energy supply lines for bade adjustment.

12. The wind turbine according to one of the preceding claims, **characterized in that** the generator housing (18), the transmission housing (20), and the head support (22) are designed to be weatherproof.

## Revendications

1. Éolienne composée au moins d'un rotor comprenant une pale de rotor (1) et un moyeu (12), d'un palier de rotor (16) accueillant le rotor, d'un carter de protection (18) pour les engrenages (32), d'un carter de protection (20) du générateur (34), d'un support de tête (32), d'une tour (14) et d'un palier azimutal (42) servant de logement au support de tête sur la tour (14), sachant que le palier du rotor (16), le carter de protection (18) des engrenages et le carter de protection du générateur (20) sont placés entre le moyeu (12) et le support de tête (22),
**caractérisée en ce que**
le palier du rotor (16), le carter de protection de l'engrenage (18), le carter de protection du générateur (20), et le support de tête (22), servent à transmettre les charges du rotor vers la tour (14) et sont reliés entre eux par des raccords vissés (54, 38).

2. Éolienne selon la revendication n°1 **caractérisée en ce que** le carter de protection de l'engrenage (18) et le carter de protection du générateur (20) sont deux carters différents.

3. Éolienne selon la revendication n°2 **caractérisée en ce que** le carter de protection de l'engrenage (18) et le carter de protection du générateur (20) ont un diamètre extérieur quasi-identique.

4. Éolienne selon une des revendications susmentionnées, **caractérisée en ce que** le palier du rotor (16) est un palier des moments directement vissé face au carter de protection (18).

5. Éolienne selon une des revendications susmentionnées, **caractérisée en ce que** l'engrenage (32) est un engrenage planétaire à deux niveaux.

6. Éolienne selon une des revendications susmentionnées, **caractérisée en ce que** le générateur (34) est un générateur synchrone excité en permanence.

7. Éolienne selon une des revendications susmentionnée, **caractérisée en ce que** le carter de projection de l'engrenage (18) et/ou le carter de protection du générateur (20) est/sont équipé(s) d'anneaux de refroidissement orientés vers l'extérieur.

8. Éolienne selon une des revendications susmentionnées, **caractérisée en ce que** les joints de l'engrenage ont la forme de garnitures en labyrinthe.

9. Éolienne selon une des revendications susmentionnées, **caractérisée en ce que** le générateur (34) est doté d'une enveloppe de refroidissement à l'eau (36) intégrée dans le carter du générateur.

10. Éolienne selon une des revendications susmentionnées, **caractérisée en ce que** dans le support de tête (22) sont placés un dispositif d'ajustement par rapport à la direction du vent qui se compose d'un palier azimutal (42), d'un entraînement réglable et de freins verticaux (40) ainsi que d'un réservoir pour huile à engrenages (46) et les refroidisseurs (48) pour l'entraînement (32) et le générateur (34).

11. Éolienne selon une des revendications susmentionnées, **caractérisée en ce que** un tuyau (72) tournant avec le régime du rotor, passant de manière centrée à travers l'engrenage (32) et le générateur (34) et logeant les fils d'alimentation électrique pour le réglage des pales.

12. Éolienne selon une des revendications susmentionnées, **caractérisée en ce que** le carter de protection du générateur (18), le carter de protection de l'engrenage (20) et le support de tête (22) sont résistants aux intempéries.
